# EUROPEAN PATENT SPECIFICATION

(11) **EP 4 089 230 B1**
(45) Date of publication and mention of the grant of the patent: **20.05.2026**
(21) Application number: 22172644.1
(22) Date of filing: 10.05.2022
(51) Int. Cl.: D21F 5/18, D21F 5/20, D21G 9/00

(54) **PROCESS AND PLANT FOR DRYING PAPER**
VERFAHREN UND ANLAGE ZUM TROCKNEN VON PAPIER
PROCEDE ET INSTALLATION DE SECHAGE DE PAPIER

(30) Priority: 12.05.2021 IT 202100012182
(43) Date of publication of application: 16.11.2022
(60) Divisional application: 26163320.0
(73) Proprietor: Mevas S.r.l., 55016 Porcari (IT)
(72) Inventor: Cinquini, Nico, 55023 Borgo a Mozzano (IT); Conti, Luca, 56021 Cascina (IT); Bellandi, Luca, 55011 Altopascio (IT)
(74) Representative: Emmi, Mario

(56) References cited:
- EP-A1- 2 298 988
- EP-A1- 2 775 030
- DE-A1- 102017 126 372

## Description

### Scope of the invention

The present invention relates to the technical field of paper drying systems, during the production process thereof.

In particular, the invention relates to a drying system providing an innovative recovery and reuse of steam, in order to reduce energy consumptions.

### Brief outline of prior art

The production process of paper, for example in the shape of a tape, has been long known.

This process uses plants wherein a tape under working, constituted by a paste of water-rich cellulose, must be desiccated to obtain the finished product.

Desiccation occurs by making the water-rich tape (water percentage well above 60%) pass onto a heated roll named Yankee dryer in technical jargon. The roll is heated since it contains inside a steam passage and, in this way, the heated tape is desiccated since its water content evaporates.

Besides heat exhaled by the Yankee dryer, a hood positioned above the said Yankee dryer and connected to an air-duct burner is used, in combination. The burner heats the air flow which hits the tape passing onto the Yankee dryer through the hood.

In this way, the tape under working is subjected to a desiccation thanks to the combined effect of the Yankee dryer and the hot air flow ejected by the hood through the burner.

The liquid which is progressively dried generates a "mist" i.e. a hot air flow of steam and liquid particles which goes up from the tape and with high temperatures, even above 400°C. The recovery of these hot flows can enable to re-enter them into the plant in order to re-use them for example to heat the Yankee dryer or feed the air-duct of the burner.

It is evident that the said recovery enables to obtain great advantages in terms of energy recovery.

Many drying plants with recovery systems of this type exist.

For example, Italian publication 0001393138 in the name of NOVIMPIANTI SRL is known.

This publication describes a drying plant with a recovery system of condensate and steam.

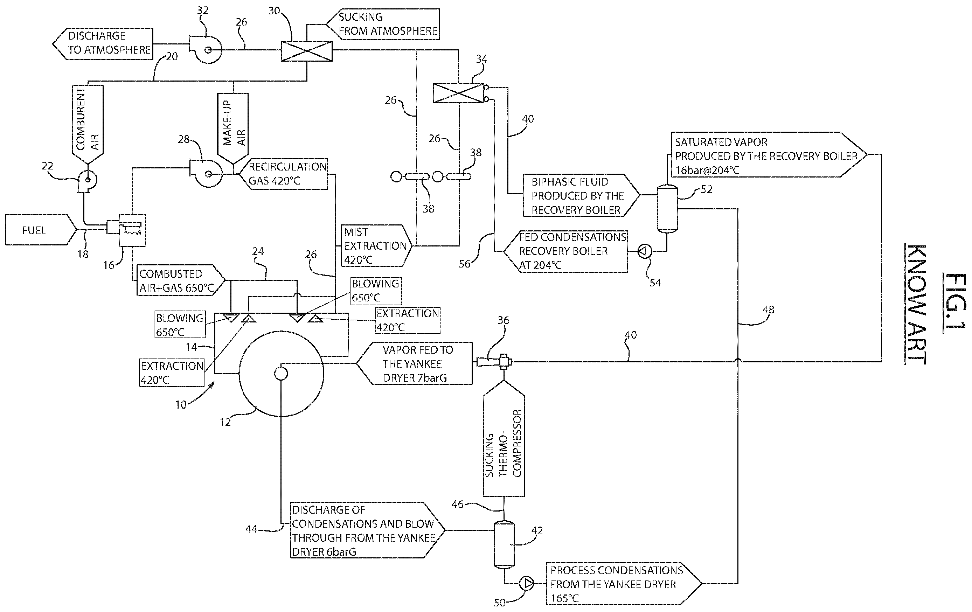

Figure 1 shows the plant scheme that is briefly described here.

Number 12 indicates the Yankee dryer onto which the paper tape under drying passes. As it is well inferable from the figure, the roll is partially covered by a hood 14 which is in fluid communication with a burner 16 which sends hot drying air to the hood, in such a way that the hot fluid hits the surface of the Yankee dryer.

Some recovery systems are provided.

Firstly, part of the exhaust recovery chain from the hood itself is sent to the burner 16 through a conduit 26.

Moreover, there is provided a recovery boiler 34 fed by a part of said mist, which is able to produce high-pressure steam which is re-sent into the roll 12 through a thermo-compressor 36.

In this way, a first part of recovery occurs.

Moreover, the plant structure forms two further recovery cycles.

In particular, in a first cycle, there is provided a first separating tank 42 connected to the said thermo-compressor 36 which is connected to the roll 12 in such a way as to form this first cycle.

In this first cycle, the tank 42 receives steam and condensate from the roll 12. The first separating tank separates the condensate from the steam and sends the steam to the thermo-compressor 36 which re-injects this steam into the roll 12. The hot condensate separated from the steam are instead sent outside of said first cycle, through a first pump 50, to a second separating and accumulating tank 52.

The said separating and accumulating tank 52, as highlighted by the attached figure 1 of prior art, is connected to the boiler 4 with the second closed cycle through a further pump 54. In this way, the tank 52 sends the hot condensate received from the tank 42, through the pump 54, to the boiler 34 which, thanks to the condensate, produces biphasic product re-injected into the tank 52. The biphasic product is separated into steam sent to the thermo-compressor 36 and further condensate is sent together with the one coming from the tank 42 to the boiler 34 which continues working according to the cycle just described (i.e. production of biphasic product sent to the tank 52).

Although the described solution is a plant scheme which enables a good energy recovery, nevertheless a first technical issue that occurs concerns the fact that steam obtained by the separation inside the tank 52 derives from a biphasic product, i.e. a mixture of steam and liquid. Therefore, the steam separated from the liquid and exiting from the tank 52 is a low-quality steam given that it is very rich in liquid.

In addition, there is a closed circulation constituted by the path connecting the second tank 52 to the boiler 34 through a delivery provided with pump 54 and a return to the tank 52 through which the biphasic product passes. This solution is constructively complex and requires at least the use of a second pump 54 with the function of sending the condensate from the tank 52 to the boiler.

A further known solution, believed to be the closest one to the present invention, concerns instead publication GB2155164 in the name of Maschinenfabrik Andritz Actiengesellschaft (named here Andritz for simplicity).

The present description describes in figure 2 the reference plant scheme that corresponds to figure 3 of the above-mentioned publication GB2155164.

Also in this case, the Yankee dryer 2 and the hood 1 are present. Condensate and steam coming from the roll 2 are recovered into the tank 19 which, with the help of the pump 34, sends the condensate to the exchanger 14 which produces steam re-sent into the Yankee dryer through the line 23.

However, according to this solution, even here the steam sent to the roll 2 has no great quality given that it is very "damp" and therefore at relatively low temperatures just because it is actually derived from condensate coming from the tank 19.

In addition, the line 23 of the steam produced by the generator is injected into the line 5 and then downstream of the thermo-compressor. This line is named make-up line in technical jargon, i.e. it is a line dedicated to the injection of the steam necessary to the correct functioning of the Yankee dryer 2, that the thermo-compressor 35 alone cannot fulfil.

During the regular production, the steam plant is subjected to continuous variations of steam consumption that, although of low quantity, if they are not managed suitably, cause evident oscillation to all the adjustment elements part of the assembly.

Because of the above, one tends to use the make-up line as a line dedicated to the compensations of the variations of steam consumption and not to the thermo-compressor itself, given that the latter, due to its intrinsic constructive nature, is not capable of compensating small variations of steam flow without causing abrupt variations of steam suction flow from the line 20.

It has to be noted that, if on one side the introduction of steam generated directly by the recovery burner in the make-up line enables to generate steam at lower pressure and thereby producing a greater quantity thereof, on the other side the recovery burner will be subjected to a continuous variation of productive flow, thereby increasing the instability thereof and causing undesired transitions wherein liquid water is dragged instead of saturated steam into the Yankee dryer 2 with a consequent decrease of the desiccating capacity thereof.

DE 10 2017 126372, EP 2 298 988 and EP 2 775 030 are also known, each disclosing plants for drying a paper web comprising regeneration of steam obtained from the Yankee cylinder.

### Summary of the invention

Therefore, the aim of the present invention is providing a new drying plant for paper material which solves said technical disadvantages.

In particular, the aim of the present invention is providing a plant wherein an energy recovery occurs, for example in the form of steam and/or condensate, which is re-sent into circulation into the plant with a great steam quality and therefore with high-temperature steam.

More particularly, the aim of the present invention is a production plant of the "instantaneous" type capable of producing in outlet from the exchanger a steam which is cleaned from any condensate in order to re-send it into circulation inside the drying process at temperature values certainly better than the Andritz prior art.

Moreover, the aim of the present invention is providing a plant wherein temperature and pressure of the steam exiting from the exchanger 104 (also named in the present description with the possible term boiler) can be adjusted precisely;

These and other aims are therefore achieved with the present dying plant for desiccating paper material, preferably in the form of a tape, according to claim 1.

This plant, according to claim 1, comprises:
- At least one drying roll (112) fed by steam in such a way as to heat up and on which the paper material to be dried is arranged in use;
- At least one hood (114) arranged in such a way as to wrap, at least partially, the said drying roll, said hood being configured in such a way as to send onto the said drying roll a drying airflow which hits the said drying roll and being further configured to suck the damp drying flow going up in use from the paper material under drying positioned onto the said drying roll;
- At least one first separating tank (101) configured to separate the steam from the condensate and placed into fluid communication with the said drying roll in such a way as to receive the fluid coming from said drying roll and separate steam from condensate;
- and wherein a heat exchanger (104) is comprised;
- said heat exchanger being placed into fluid communication with said first separating tank through a first part of a conduit (103) which connects said first separating tank with said heat exchanger;
- and wherein a pump (102) arranged along the said first part of conduit is comprised, the pump being therefore interposed between said heat exchanger and the first tank and with the said pump configured to push condensate contained into said tank towards the heat exchanger;
- According to the invention a second tank (108) is now comprised.

This second tank is a second separating tank configured to separate steam from condensate and placed into fluid communication with the said heat exchanger through a second part of a conduit (107).

This second part of conduit is without a pump, the said pump arranged in the first part being in fact configured in such a way as to push condensate coming from the first separating tank into the heat exchanger (104) and contextually push the consequent fluid obtained from said heat exchanger towards the second separating tank (108).

The second tank is in its turn connected to a third part of a conduit (109) configured to discharge the steam, separated from the condensate, outside of said second separating tank.

The said third part of conduit is therefore connected, for this purpose, to the said drying roll (112) in such a way that the drying roll can receive at least some of the obtained steam and coming from said second separating tank.

Further, the said second separating tank provides an outlet for discharging any possible condensate present in the tank (108).

In this way, all the above-mentioned technical issues are readily resolved.

In particular, the plant is structurally simpler, given that a single pump is present and no loop which reintroduces condensate into the exchanger is present in order to produce a biphasic product.

According to this solution, the steam obtained and sent along the line 109 is high-pressure and high-temperature steam.

Advantageously, the said second separating tank (108) provides a fourth part of a conduit (111) configured for the said discharge of condensate.

Advantageously, the said fourth part of conduit (111) is connected with the first separating tank (101).

According to a further advantageous feature of the invention, the plant comprises an adjustment system suitable for enabling to adjust the temperature and/or pressure of steam that can be produced by said heat exchanger (104).

More particularly, advantageously, said adjustment system provides a control system which adjusts the thrust of the pump (102) depending on the measured temperature of steam exiting from the heat exchanger (104) along the part of conduit (107), in such a way as to vary the quantity of condensate pushed from the tank (101) along the part of conduit (103) towards the heat exchanger (104) depending on said temperature detected in the part (107) exiting from the heat exchanger.

The more the condensate is sent, obviously the lower the temperature of the produced steam is.

If one desires to increase the temperature (and therefore the overheating degree thereof and consequently the quality of the steam entering into the Yankee dryer) of the obtained steam, it is sufficient to reduce the condensate flow through a suitable adjustment system acting both/either on the rotation speed of the rotor pump and/or on the opening degree of an adjusting valve positioned on a part of the line 103 or 107, in such a way as to thrust fewer condensate towards the exchanger.

The condensate flow can be therefore controlled both with the pump speed but also with an adjusting valve that can be positioned both/either on the part 103 and/or on the part 107.

Independently from the description above, or preferably in combination and in synergy with the description above, there is further comprised a bypass system (105) capable of adjusting and/or interrupting the flow quantity of hot fumes which, through a line of conduit (126"), penetrate into the heat exchanger (104).

The said control system controls in fact the opening/closing value of said bypass system (105) in such a way as to adjust the flow of hot fumes entering into the heat exchanger and thereby adjusting the heat exchange of fumes with the condensate circulating into the exchanger and coming from the said part of conduit (103).

Substantially, the more the fumes enter, the greater the heat exchange is and therefore the greater the pressure of the obtained steam is.

More particularly, therefore, the more the fumes enter and the greater the heat exchange is and therefore the greater the power for producing the same quantity of steam at higher pressure is.

There is also described here a method for drying a paper material, preferably in the form of a tape, with a plant according to one or more of the above-described features, the said method comprising the following phases:
- Recovery of fluid coming from the drying roll through the first separating tank (101) and separation of the steam from the condensate;
- Re-sending at least a part of the said steam to the drying roll;
- Sending said condensate, through the pump (102), to the heat exchanger (104) which generates a steam;
- Sending of said steam to the second separating tank (108) which separates the steam from any possible presence of condensate and re-sending at least a part of said steam cleaned from the condensate directly from the said second separating tank to the drying roll.

Advantageously, the steam re-sent to the drying roll (112) bypasses the thermo- compressor (136).

Advantageously, there is comprised a phase of adjustment of the temperature of the steam exiting from the heat exchanger (104) along the part of conduit (107), said adjustment of temperature comprising the measurement of the steam temperature in the said part (107) and the consequent adjustment of the thrust generated by the pump (102) depending on the detected temperature.

Advantageously, there is comprised a phase of adjustment of the pressure of the steam exiting from the heat exchanger (104) along the part of conduit (107), said adjustment of the pressure comprising an adjustment of the opening of the bypass (105) in such a way as to adjust the quantity of hot fumes entering into the said heat exchanger.

Advantageously, there is also comprised a discharging phase of the condensate of the second separating tank (108) outside or a re-sending thereof to the first separating tank (101).

### Brief description of the drawings

Additional features and advantages of the present plant, according to the invention, will become apparent from the following description of preferred embodiments thereof, given only by way of non-exhaustive example, with reference to the attached drawings, wherein:
- Figure 1 shows the plant according to the publication of the granted Italian patent in the name of Novimpianti, with grant number 0001393138

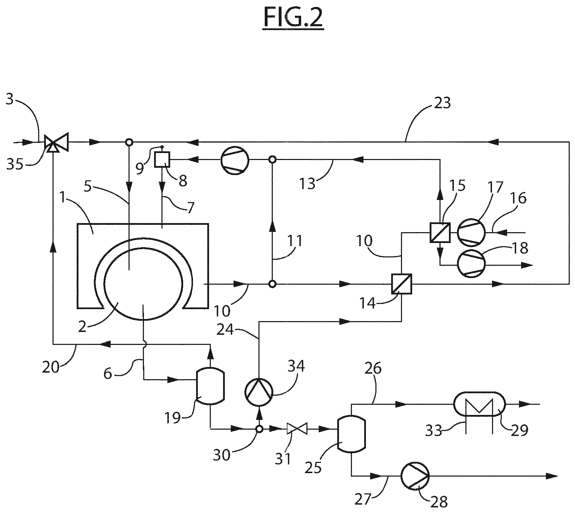

- Figure 2 shows a plant scheme according to publication GB2155164;
- Figure 3 shows the innovative part of the plant according to the present invention;
- Figure 4 shows an overall view of the whole plant wherein square A delimits the innovative part shown in figure 3;
- Figure 5 shows the remaining plant part external to part A (and indicated in figure 5 as part B) in an enlarged detail;

### Description of some preferred embodiments

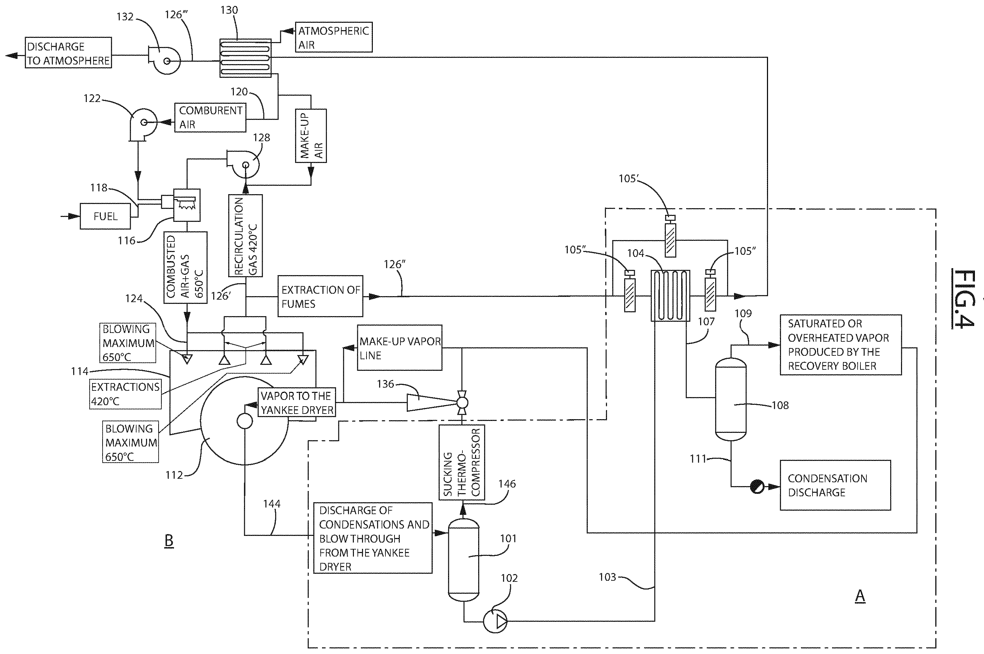

Figure 4 shows the overall plant according to the present invention.

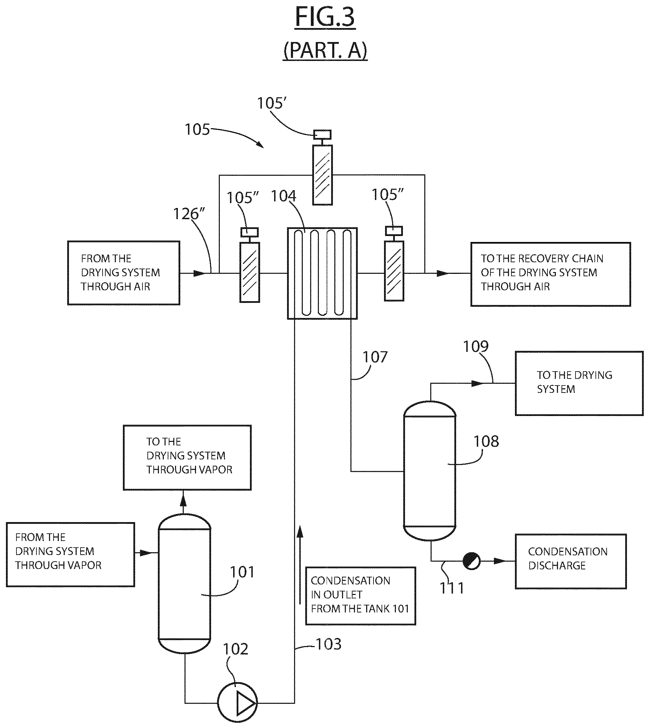

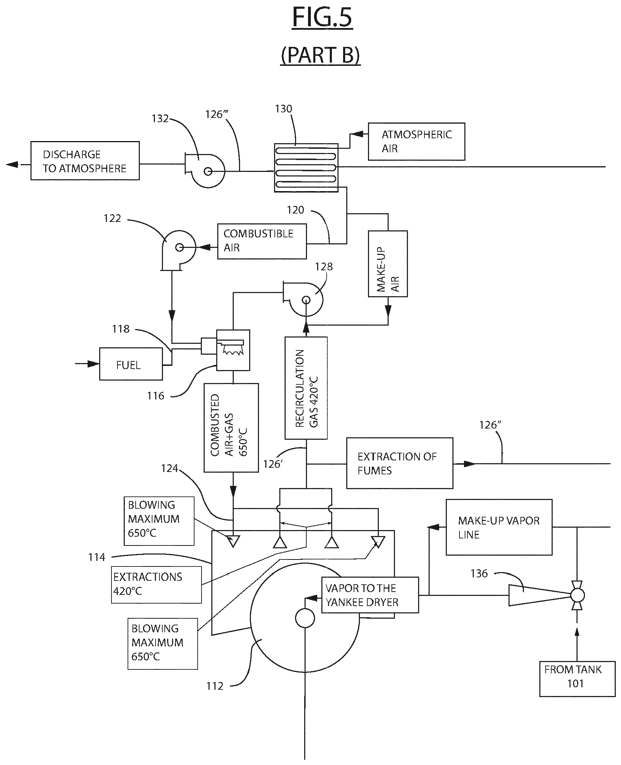

Figure 3 and figure 5 show in an enlarged detail two parts of the whole plant of figure 4, to better highlight it in a clearer way.

In fact, figure 4 delimits, with a hatched line, the innovative part of plant which is connected to the remaining part which is substantially known art and cites for the most part the description of the above-mentioned publication in the name of Novimpianti.

Therefore, the sum of the depiction in figure 3 and in figure 5 fits the overall plant of figure 4.

Going then more into the descriptive detail, as well as also shown in figures 4 and 5, the Yankee dryer 112 wound at least partially from the hood 114 is highlighted. The said roll works exactly as described in the prior art and, for this reason, it is not described further, structurally.

The hood 114 is arranged on the roll 112 in such a way as to wind it up at least partially.

The fumes ("the mist") collected by the hood are partially sent through a first line 126' to a fan 128 which forces these fumes towards the burner 116.

The burner 116, as per the prior art, feeds the hood with the drying hot air flow which is sent to the surface of the Yankee dryer onto which the tape of cellulose (substantially, paper tape) material to be dried passes.

Another part of the extracted fumes is sent through the line 126" to the part "A" subject of the invention which is described in detail below.

The component 136 is a thermo-compressor which, as already known by the Novimpianti publication, receives steam coming from a first separating tank 101 in order to re-send them into the Yankee dryer 112 and thereby obtaining an energy recovery.

As already known for example from the Novimpianti publication, there is comprised a first circulation ring of fluids formed by the branch 144 - tank 101 - branch 146 - thermo-compressor 136 - Yankee dryer 112.

In this way, some of the steam recovered from the first separating tank 101 are re-sent into the roll 112.

The component 130 is an exchanger (air/air) which produces comburent air to be still sent to the burner 116.

This scheme part is known art for the most part and it is for example already described in the Novimpianti publication and therefore it is not described further here.

Figure 3 schematizes in an enlarged view the plant part according to the invention and delimited in figure 4 with a hatched line (part "A").

Therefore, there is the first separating tank 101 (already introduced above) which receives the fluid exiting from the Yankee dryer 112, in particular steam and condensate, exactly as already described in the publication in the name of Novimpianti.

In fact, figure 3 shows, with the corresponding arrow direction, the feeding to this first tank of a fluid coming from the drying system through steam and therefore from the Yankee dryer and this feeding is also evident from figure 4.

The fluid which is collected into the said tank is a combination of steam and condensate and the said tank, since it is a separating one, carries out the function of separating steam from condensate.

Still as depicted in figure 3, the steam obtained (at least a part thereof) is sent from the said tank 101 to the drying system, i.e. to the Yankee dryer.

Generally, exactly like the solution of the known art already described by Novimpianti, it is then provided the thermo-compressor 136 (see indeed figure 4 of the whole plant) to which said steam comes through a line 146 and which is fed again to the Yankee dryer.

Condensate separated from steam, still through the said first tank 101, is sent to a heat exchanger 104 through a pump 102.

More particularly, as still depicted in figure 3, there is provided a first part of conduit 103 which puts the heat exchanger 104 into fluid communication with the first separating tank 101.

The said part is then a conduit through which the fluid, in this case the condensate, obtained from the tank 101 circulates or can circulate and which is sent (therefore pushed) to the exchanger, through the pump 102.

The used heat exchanger 104 is preferably of the type air/water.

It is of the commercial type and provides a vaporizing beam, i.e. a finned tube coil (see the serpentine schematized in figure 3) which will have, outside of the tubes, the hot and damp fumes coming from the drying system and inside the tubes liquid water (condensate coming from the tank 101) which will be transformed into saturated or overheated steam, depending on the production needs and thanks to the heat exchange fumes/condensate.

The hot fume transfers heat to the condensate that vaporizes.

The heater 104 per se is a commercial product already provided with attachments to connect it to the delivery 103 and the outlet 107.

The pump 102 is therefore arranged upstream of the said exchanger 104 and therefore actually arranged into the said part of conduit 103 in a point comprised between the tank 101 and the heater 104.

The terms "upstream" and "downstream" in the present description follow the course of the fluid from the tank 101 towards the tank 108, thus identifying as upstream the zone on the side of the tank 101 and as downstream the zone on the side of the tank 108.

The condensate entering into the exchanger 104 is transformed into steam since it intercepts the fumes coming from the line 126" and which steam, through the second part of conduit 107, is sent to a second separating tank 108.

The first and the second part form actually a single continuous circulation part which penetrates into the exchanger 104 and exits therefrom to get into the tank 108.

More particularly, the first and the second part form actually a single line together with the path of the exchanger 104 thus becoming the inlet and the outlet thereof (water side) and, as mentioned, they absorb heat from the fumes thus becoming steam in outlet.

In fact, as mentioned, the exchanger has its inner serpentine which is connected with suitable joints to the ends of the said conduits 103 and 107.

Along the part 103 the condensate which circulates into the serpentine of the exchanger 104 flows thus becoming steam thanks to the exchange with the hot fumes coming from drying of paper through the line 126". Along the line 107 therefore a fluid in the form of steam or substantially steam flows (the presence of condensate is generally minimum).

The thrust of the fluid, i.e. condensate in the part 103 and steam (or substantially steam) in the part 107, occurs through the only pump provided for this purpose, i.e. the pump 102.

Therefore, no additional pump is provided in part 107.

The tank 108 is a separating tank and therefore identical in functional and also structural terms to the tank 101.

In fact, although one expects the sending of only pure steam along the part 107 from the exchanger 104, the possibility of the presence of condensate from which the steam must be depurated is not excluded.

Therefore, figure 3 shows the said separating tank 108 having two outlets.

A first outlet to which a third part of conduit 109 converges and a second outlet to which a fourth part of conduit 111 converges.

The said outlet branch 109, as schematized in figure 3 and in figure 4, connects the said tank 108 to the Yankee dryer to which said steam is fed.

The steam feeds both the thermo-compressor and the "make-up" line.

The discharge 111 can be a discharge into the atmosphere.

However, preferably, a recovery of these hot condensate can be provided and they can be moved back through the conduit 111 to the first tank.

Therefore, preferably, the conduit 111 connects the first tank to the second tank for a recovery of the condensate which move from the second tank to the first one.

The movement of these condensate from the second tank to the first tank occurs without the help of pumps due to the pressure difference between said two tanks. Practically, the second tank reaches an operative pressure greater than the first tank and this enables to transfer the condensate.

Also sending steam from the second tank back to the Yankee dryer occurs without the help of pumps but due to pressure difference.

Therefore, the plant described in figure 3 is for the most part a plant with instantaneous production of forced circulation steam like the Andritz publication wherein, instead, a further separating tank 108 is added enabling to obtain a steam of better quality and with higher temperatures than the one obtainable with the Andritz system without this separating tank 108.

The solution described so far is a solution simpler than the plant described in the Novimpianti publication, given that no second pump is present and given that in this case a separating tank is provided instead of a separating and accumulating tank like Novimpianti inserted in a closed circulation with the second pump and the exchanger.

Going further with the structural description of the plant shown in figure 3 and figure 4, as mentioned, condensate and corresponding "blow through" steam arrive from the drying system of the Yankee dryer into the tank 101. A part of or the whole condensate contained into the tank 101 of figure 3, instead of being sent into the thermal station, is used to be conveyed into the heat exchanger 104 in such a way as to recover heat from the discharging fumes of the air-drying system line 126". The exchanger 104 of figure 3 is intercepted by some air locks 105 that have the double purpose of:
- Intercepting the recovery boiler 104 stopping the steam production thereof, thus enabling anyway to discharge the exhaust fumes through the bypass and therefore not to influence the production. Closing the inlet and outlet air locks and opening the by-pass one actually means ceasing the steam production. This condition of ceasing production can be requested both for security purposes (in case of emergency the battery must be isolated from the heat source that is the hot discharging fumes) and for process causes (like for example if the temperature of fumes entering into the boiler goes below of a threshold value that would cause it to be dirtied due to the deposition of paper residues onto the boiler body);
- Varying the flow of discharging fumes (and therefore the power) to the boiler 104, in such a way as to control the steam quantity produced through the line 107.

Therefore, another innovative feature of the present invention consists in the presence of an adjustment system.

The flow of condensate towards the exchanger 104 is adjusted by acting onto the rotation speed of the rotor of the pump 102 depending on the temperature of the steam exiting from the exchanger 104. If acting only on the rotor speed of the pump is not sufficient, it is also possible to provide an adjusting valve positioned onto the part 103 and/or 107 that can increase or decrease the condensate flow to the exchanger thanks to the opening degree.

For example, if one wishes a greater temperature in outlet from the exchanger 104, the pump 102 will decrease the speed and consequently will decrease the condensate flow towards the exchange battery 104. The fumes, intercepting fewer condensate in the exchanger, will heat this condensate more.

The flow of fumes towards the battery 104 is adjusted by acting onto the air locks 105 depending on the pressure of steam that one wishes to obtain into the tank 8. If the produced steam is the same, the more a high pressure of the tank 108 is requested, the more the flow of fumes 106 must increase towards the battery 104.

Therefore, the combination of adjustment of the rotor speed of the pump 102 with any possible adjustment valve (therefore control of the quantity of condensate flow sent towards the exchanger) and the adjustment of the quantity of opening/closing of the air locks 105 (therefore control of the quantity of exchange fumes sent towards the exchanger) enable to adjust the temperature and pressure of the steam produced entering into the tank 108.

## Claims

1. A drying plant for desiccating paper material, preferably in the form of a tape, the said drying plant comprising:
- at least one drying roll (112) fed with steam in such a way as to heat up and on which the paper material to be dried is arranged in use;
- at least one hood (114) arranged in such a way as to wrap, at least partially, the said drying roll, said hood being configured in such a way as to send onto the said drying roll a drying airflow which hits the said drying roll and being further configured to suck in the damp drying flow going up in use from the paper material under drying positioned on the said drying roll;
- at least one first separating tank (101) configured to separate the steam from the condensate and placed into fluid communication with the said drying roll in such a way as to receive the fluid coming from said drying roll and separate steam from condensate;
- and wherein a heat exchanger (104) is comprised;
- said heat exchanger being placed into fluid communication with said first separating tank through a first part of a conduit (103) which connects said first separating tank with said heat exchanger;
- and wherein a pump (102) arranged along the said first part of conduit is comprised, the pump being therefore interposed between said heat exchanger and the first tank and with the said pump configured to push the condensate contained into said tank towards the heat exchanger;
furthermore comprising a second tank (108), said second tank being a second separating tank configured to separate steam from condensate and placed into fluid communication with the said heat exchanger through a second part of a conduit (107), said second part of conduit (107) being without pump and wherein no return conduit is provided for connecting directly with a return the said second separating tank with the said heat exchanger (104) so that no closed circulation is generated between the said heat exchanger and the said second tank, the said pump arranged in the first part being configured in such a way as to push the condensate coming from the first separating tank into the heat exchanger (104) and contextually push the consequent fluid obtained from said heat exchanger towards the second separating tank (108), the said second tank being connected to a third part of a conduit (109) configured to send at least a part of the steam, separated from the condensate, in outlet from said second separating tank, said third part of conduit being connected to the said drying roll (112) in such a way that the drying roll can receive at least a part of the obtained steam and coming from said second separating tank and wherein, further, the said second separating tank provides an outlet for discharging the condensate and wherein is comprised an adjustment system suitable for enabling to adjust the temperature and/or the pressure of the steam that can be produced by said heat exchanger (104).

2. The plant, according to claim 1, wherein the said second separating tank (108) provides a fourth part of a conduit (111) configured for said discharge of the condensate.

3. The plant, according to claim 2, wherein the said fourth part of conduit (111) is connected with the first separating tank (101) or wherein the said fourth part of conduit (111) discharges into the atmosphere.

4. The plant, according to claim 1, wherein said adjustment system provides a control system which adjusts the thrust of the pump (102) depending on the measured temperature of the steam exiting from the heat exchanger (104) along the part of conduit (107), in such a way as to vary the quantity of condensate pushed from the tank (101) along the part of conduit (103) towards the heat exchanger (104) depending on said temperature detected in the part (107) in outlet from the heat exchanger.

5. The plant, according to one or more of the preceding claims, further comprising a bypass system (105) capable of adjusting and/or interrupting the flow quantity of hot fumes which, through a line of conduit (126"), penetrate into the heat exchanger (104), the said control system controlling the opening/closing value of said bypass system (105) in such a way as to adjust the flow of the fumes entering into the heat exchanger and thus to adjust the heat exchange of fumes with the condensate circulating inside the exchanger and coming from the said part of conduit (103).

6. A method for drying paper material, preferably in the form of a tape, with a plant according to one or more of the preceding claims from 1 to 5, the said method comprising the following phases:
- Recovering the fluid coming from the drying roll through the first separating tank (101) and separation of the steam from the condensate;
- Re-sending at least a part of said steam to the drying roll;
- Sending said condensate, through the pump (102), to the heat exchanger (104) which generates a steam;
- Sending at least a part of said steam to the second separating tank (108) which separates the steam from any possible presence of condensate and re-sending at least a part of said steam cleaned from the condensate directly from the said second separating tank to the drying roll.

7. The method, according to claim 6, wherein the steam re-sent to the drying roll (112) feeds the thermo-compressor (136).

8. The method, according to claim 6 or 7, comprising a phase of adjustment of the temperature of the steam exiting from the heat exchanger (104) along the part of conduit (107), said adjustment of temperature comprising the measurement of the steam temperature in said part (107) and the consequent adjustment of the thrust generated by the pump (102) depending on the detected temperature.

9. The method, according to one or more of the preceding claims from 6 to 8, comprising a phase of adjustment of the pressure of the steam exiting from the heat exchanger (104) along the part of conduit (107), said adjustment of pressure comprising an adjustment of the opening of the bypass (105) in such a way as to adjust the quantity of hot fumes entering into the said heat exchanger.

## Patentansprüche

1. Trocknungsanlage zum Trocknen von Papiermaterial, vorzugsweise in Form eines Bandes, wobei die Trocknungsanlage umfasst:
- mindestens eine Trocknungswalze (112), die mit Dampf so beaufschlagt wird, dass sie sich erwärmt, und auf der das zu trocknende Papiermaterial im Gebrauch angeordnet ist;
- mindestens eine Haube (114), die so angeordnet ist, dass sie die Trocknungswalze zumindest teilweise umhüllt, wobei die Haube so konfiguriert ist, dass sie auf die Trocknungswalze einen Trocknungsluftstrom sendet, der auf die Trocknungswalze trifft, und ferner so konfiguriert ist, dass sie den feuchten Trocknungsstrom ansaugt, der im Gebrauch von dem auf der Trocknungswalze positionierten zu trocknenden Papiermaterial aufsteigt;
- mindestens einen ersten Trennbehälter (101), der so konfiguriert ist, dass er den Dampf vom Kondensat trennt, und mit der Trocknungswalze in Fluidkommunikation gebracht wird, um das aus der Trocknungswalze kommende Fluid aufzunehmen und Dampf vom Kondensat zu trennen;
- und wobei ein Wärmetauscher (104) enthalten ist;
- wobei der Wärmetauscher durch einen ersten Teil einer Leitung (103), die den ersten Trennbehälter mit dem Wärmetauscher verbindet, in Fluidkommunikation mit dem ersten Trennbehälter gebracht wird;
- und wobei eine Pumpe (102), die entlang des ersten Teils der Leitung angeordnet ist, enthalten ist, wobei die Pumpe daher zwischen dem Wärmetauscher und dem ersten Behälter eingefügt ist und wobei die Pumpe konfiguriert ist, um das in dem Behälter enthaltene Kondensat in Richtung des Wärmetauschers zu schieben;
ferner umfassend einen zweiten Behälter (108), wobei der zweite Behälter ein zweiter Trennbehälter ist, der so konfiguriert ist, dass er Dampf von Kondensat trennt und durch einen zweiten Teil einer Leitung (107) in Fluidkommunikation mit dem Wärmetauscher gebracht wird, wobei der zweite Teil der Leitung (107) ohne Pumpe ist und wobei keine Rückführleitung zum direkten Verbinden des zweiten Trennbehälters mit dem Wärmetauscher (104) mit einem Rücklauf vorgesehen ist, so dass kein geschlossener Kreislauf zwischen dem Wärmetauscher und dem zweiten Behälter erzeugt wird, wobei die im ersten Teil angeordnete Pumpe so konfiguriert ist, dass sie das aus dem ersten Trennbehälter kommende Kondensat in den Wärmetauscher (104) schiebt und dabei das nachfolgende, aus dem Wärmetauscher erhaltene Fluid in Richtung des zweiten Trennbehälters (108) schiebt, wobei der zweite Behälter mit einem dritten Teil einer Leitung (109) verbunden ist, die so konfiguriert ist, dass sie zumindest einen Teil des vom Kondensat abgetrennten Dampfes als Ausgabe des zweiten Trennbehälters sendet, wobei der dritte Teil der Leitung mit der Trocknungswalze (112) so verbunden ist, dass die Trocknungswalze zumindest einen Teil des erhaltenen und aus dem zweiten Trennbehälter kommenden Dampfes aufnehmen kann, und wobei ferner der zweite Trennbehälter einen Auslass zum Abführen des Kondensats vorsieht und wobei ein Einstellsystem enthalten ist, das geeignet ist, die Einstellung der Temperatur und/oder des Drucks des Dampfes, der durch den Wärmetauscher (104) erzeugt werden kann, zu ermöglichen.

2. Anlage nach Anspruch 1, wobei der zweite Trennbehälter (108) einen vierten Teil einer Leitung (111) vorsieht, die zum Abführen des Kondensats konfiguriert ist.

3. Anlage nach Anspruch 2, wobei der vierte Teil der Leitung (111) mit dem ersten Trennbehälter (101) verbunden ist oder wobei der vierte Teil der Leitung (111) in die Atmosphäre mündet.

4. Anlage nach Anspruch 1, wobei das Einstellsystem ein Steuersystem vorsieht, das den Schub der Pumpe (102) in Abhängigkeit von der gemessenen Temperatur des Dampfes, der aus dem Wärmetauscher (104) entlang des Teils der Leitung (107) austritt, einstellt, um die Menge des Kondensats, das aus dem Behälter (101) entlang des Teils der Leitung (103) in Richtung des Wärmetauschers (104) geschoben wird, in Abhängigkeit von der Temperatur, die in dem Teil (107) als Ausgabe des Wärmetauschers erfasst wird, zu variieren.

5. Anlage nach einem oder mehreren der vorhergehenden Ansprüche, ferner umfassend ein Bypass-System (105), das in der Lage ist, die Durchflussmenge heißer Dämpfe, die durch eine Leitungslinie (126") in den Wärmetauscher (104) eindringen, einzustellen und/oder zu unterbrechen, wobei das Steuersystem den Öffnungs-/Schließwert des Bypass-Systems (105) steuert, um den Strom der in den Wärmetauscher eintretenden Dämpfe einzustellen und somit den Wärmeaustausch der Dämpfe mit dem Kondensat, das innerhalb des Wärmetauschers zirkuliert und aus dem Teil der Leitung (103) kommt, einzustellen.

6. Verfahren zum Trocknen von Papiermaterial, vorzugsweise in Form eines Bandes, mit einer Anlage nach einem oder mehreren der vorhergehenden Ansprüche 1 bis 5, wobei das Verfahren die folgenden Schritte umfasst:
- Rückgewinnen des aus der Trocknungswalze durch den ersten Trennbehälter (101) kommenden Fluids und Abtrennen des Dampfes vom Kondensat;
- erneutes Senden mindestens eines Teils des Dampfes zu der Trocknungswalze;
- Senden des Kondensats durch die Pumpe (102) zu dem Wärmetauscher (104), der einen Dampf erzeugt;
- Senden mindestens eines Teils des Dampfes zu dem zweiten Trennbehälter (108), der den Dampf von eventuell vorhandenem Kondensat abtrennt, und erneutes Senden mindestens eines Teils des vom Kondensat gereinigten Dampfes direkt von dem zweiten Trennbehälter zu der Trocknungswalze.

7. Verfahren nach Anspruch 6, wobei der zu der Trocknungswalze (112) erneut gesendete Dampf den Thermokompressor (136) speist.

8. Verfahren nach Anspruch 6 oder 7, umfassend einen Schritt zur Einstellung der Temperatur des Dampfes, der aus dem Wärmetauscher (104) entlang des Teils der Leitung (107) austritt, wobei die Einstellung der Temperatur die Messung der Dampftemperatur in dem Teil (107) und die anschließende Einstellung des von der Pumpe (102) erzeugten Schubes in Abhängigkeit von der erfassten Temperatur umfasst.

9. Verfahren nach einem oder mehreren der vorhergehenden Ansprüche 6 bis 8, umfassend einen Schritt zur Einstellung des Drucks des Dampfes, der aus dem Wärmetauscher (104) entlang des Teils der Leitung (107) austritt, wobei die Einstellung des Drucks eine Einstellung der Öffnung des Bypasses (105) umfasst, sodass die Menge heißer Dämpfe, die in den Wärmetauscher eintreten, eingestellt wird.

## Revendications

1. Installation de séchage destinée à déshydrater des matériaux en papier, de préférence sous forme de bande, ladite installation de séchage comprenant :
- au moins un rouleau de séchage (112) alimenté en vapeur de manière à être chauffé et sur lequel le matériau en papier à sécher est placé lors de l'utilisation ;
- au moins un capot (114) disposé de manière à envelopper, au moins partiellement, ledit rouleau de séchage, ledit capot étant conçu pour envoyer sur ledit rouleau de séchage un flux d'air de séchage qui vient frapper ledit rouleau de séchage, et étant en outre conçu pour aspirer le flux d'air humide qui, lors de l'utilisation, s'élève depuis le matériau en papier en cours de séchage placé sur ledit rouleau de séchage ;
- au moins un premier réservoir de séparation (101) conçu pour séparer la vapeur du condensat et mis en communication fluidique avec ledit rouleau de séchage de manière à recevoir le fluide provenant dudit rouleau de séchage et à séparer la vapeur du condensat ;
- et dans lequel est prévu un échangeur de chaleur (104) ;
- ledit échangeur de chaleur étant mis en communication fluidique avec ledit premier réservoir de séparation par l'intermédiaire d'une première partie d'un conduit (103) qui relie ledit premier réservoir de séparation audit échangeur de chaleur ;
- et dans lequel est prévue une pompe (102) disposée le long de ladite première partie du conduit, la pompe étant ainsi intercalée entre ledit échangeur de chaleur et le premier réservoir, et ladite pompe étant conçue pour pousser le condensat contenu dans ledit réservoir vers l'échangeur de chaleur ;
comprenant en outre un deuxième réservoir (108), ledit deuxième réservoir étant un deuxième réservoir de séparation conçu pour séparer la vapeur du condensat et mis en communication fluidique avec ledit échangeur de chaleur par l'intermédiaire d'une deuxième partie d'un conduit (107), ladite deuxième partie du conduit (107) étant dépourvue de pompe et dans lequel aucun conduit de retour n'est prévu pour relier directement ledit deuxième réservoir de séparation audit échangeur de chaleur (104) de sorte qu'aucune circulation fermée ne soit générée entre ledit échangeur de chaleur et ledit deuxième réservoir, ladite pompe disposée dans la première partie étant configurée de manière à pousser le condensat provenant du premier réservoir de séparation dans l'échangeur de chaleur (104) et, simultanément, à pousser le fluide résultant obtenu à partir dudit échangeur de chaleur vers le deuxième réservoir de séparation (108), ledit deuxième réservoir étant relié à une troisième partie d'un conduit (109) configuré pour envoyer au moins une partie de la vapeur, séparée du condensat, à la sortie dudit deuxième réservoir de séparation, ladite troisième partie de conduit étant reliée audit rouleau de séchage (112) de telle sorte que le rouleau de séchage puisse recevoir au moins une partie de la vapeur obtenue et provenant dudit deuxième réservoir de séparation, et dans lequel, en outre, ledit deuxième réservoir de séparation présente une sortie pour évacuer le condensat et comprend un système de réglage permettant de régler la température et/ou la pression de la vapeur pouvant être produite par ledit échangeur de chaleur (104).

2. Installation selon la revendication 1, dans laquelle ledit deuxième réservoir de séparation (108) présente une quatrième partie d'un conduit (111) conçu pour ladite évacuation du condensat.

3. Installation selon la revendication 2, dans laquelle ladite quatrième partie de conduit (111)est reliée au premier réservoir de séparation (101) ou dans laquelle ladite quatrième partie de conduit (111) se décharge dans l'atmosphère.

4. Installation selon la revendication 1, dans laquelle ledit système de réglage comprend un système de commande qui ajuste la poussée de la pompe (102) en fonction de la température mesurée de la vapeur sortant de l'échangeur de chaleur (104) le long de la partie de conduit (107), de manière à faire varier la quantité de condensat poussée depuis le réservoir (101) le long de la partie de conduit (103) vers l'échangeur de chaleur (104) en fonction de ladite température détectée dans la partie (107) à la sortie de l'échangeur de chaleur.

5. Installation selon l'une ou plusieurs des revendications précédentes, comprenant en outre un système de dérivation (105) capable de régler et/ou d'interrompre le débit des fumées chaudes qui, par l'intermédiaire d'une conduite (126"), pénètrent dans l'échangeur de chaleur (104), ledit système de commande régulant la valeur d'ouverture/fermeture dudit système de dérivation (105) de manière à ajuster le flux des fumées entrant dans l'échangeur de chaleur et, par conséquent, à ajuster l'échange thermique entre les fumées et le condensat circulant à l'intérieur de l'échangeur et provenant de ladite partie de conduit (103).

6. Procédé de séchage d'un matériau en papier, de préférence sous forme de bande, à l'aide d'une installation selon l'une ou plusieurs des revendications précédentes 1 à 5, ledit procédé comprenant les phases suivantes :
- récupérer le fluide provenant du rouleau de séchage via le premier réservoir de séparation (101) et séparation de la vapeur du condensat ;
- renvoyer au moins une partie de ladite vapeur vers le rouleau de séchage ;
- envoyer ledit condensat, par l'intermédiaire de la pompe (102), vers l'échangeur de chaleur (104) qui produit de la vapeur ;
- envoyer au moins une partie de ladite vapeur vers le deuxième réservoir de séparation (108), qui sépare la vapeur de tout condensat éventuellement présent, puis renvoyer au moins une partie de ladite vapeur, débarrassée du condensat, directement depuis ledit deuxième réservoir de séparation vers le rouleau de séchage.

7. Procédé selon la revendication 6, dans lequel la vapeur renvoyée vers le rouleau de séchage (112) alimente le thermocompresseur (136).

8. Procédé selon la revendication 6 ou 7, comprenant une phase de réglage de la température de la vapeur sortant de l'échangeur de chaleur (104) le long de la partie de conduit (107), ledit réglage de température comprenant la mesure de la température de la vapeur dans ladite partie (107) et le réglage consécutif de la poussée générée par la pompe (102) en fonction de la température détectée.

9. Procédé selon l'une ou plusieurs des revendications précédentes 6 à 8, comprenant une phase de réglage de la pression de la vapeur sortant de l'échangeur de chaleur (104) le long de la partie de conduit (107), ledit réglage de pression comprenant un réglage de l'ouverture de la dérivation (105) de manière à ajuster la quantité de fumées chaudes entrant dans ledit échangeur de chaleur.
